# EUROPEAN PATENT APPLICATION

(11) **EP 4 734 192 A1**
(43) Date of publication of application: **29.04.2026**
(21) Application number: 24825952.5
(22) Date of filing: 19.06.2024
(51) Int. Cl.: H01M 6/16, H01M 4/40

(54) **LITHIUM PRIMARY BATTERY**

(30) Priority: 21.06.2023 JP 2023101908
(71) Applicant: Panasonic Intellectual Property Management Co., Ltd., Kadoma-shi, Osaka 571-0057 (JP)
(72) Inventor: NISHITANI, Satoshi, Osaka 571-0057 (JP); SAITO, Kohei, Osaka 571-0057 (JP)
(74) Representative: Eisenführ Speiser
(86) International application number: PCT/JP2024/022276
(87) International publication number: WO 2024/262551

(57) **Abstract**

A lithium primary battery includes a positive electrode, a negative electrode, and a liquid electrolyte. The positive electrode contains at least one selected from the group consisting of manganese dioxide and graphite fluoride. The negative electrode contains a lithium alloy. The lithium alloy contains magnesium. The content of the magnesium in the lithium alloy is 10% by mass or less. The liquid electrolyte contains a nonaqueous solvent, a solute, and an additive. The additive contains a phosphorus compound. The phosphorus compound has a POₙ structure having a phosphorus atom and n oxygen atoms bonded to the phosphorus atom, where n represents 2 to 4.

## Description

### [Technical Filed]

The present disclosure relates to a lithium primary battery.

### [Background Art]

Due to their high energy density and low self-discharge, lithium primary batteries are used as power sources for various electronic devices. For positive electrodes of the lithium primary batteries, manganese dioxide is used, for example. For negative electrodes of the lithium primary batteries, metallic lithium or a lithium alloy formed in a sheet shape (foil shape) is used, for example.

Patent Literature 1 proposes "a lithium negative electrode of a lithium-organic electrolyte battery in which a lithium salt is dissolved in an electrolyte and a separator is disposed to face the negative electrode, wherein a stack in which a coating layer of an initially aluminum-magnesium alloy is stacked on the surface of a lithium body adjoining the separator is initially used as the negative electrode, and an aluminum-magnesium-lithium ternary alloy is formed by diffusion so that the negative electrode surface area is increased to enhance the pulsing performance of the battery".

Patent Literature 2 proposes "a cylindrical liquid electrolyte primary battery including an electrode group with a wound configuration in which a positive electrode containing manganese dioxide and a negative electrode are spirally wound with a separator therebetween, wherein the negative electrode includes a metallic lithium-containing layer consisting of only one continuous layer on one side of a current collector, 85% or more of the area of the surface of the current collector on which the metallic lithium-containing layer is formed is covered with the metallic lithium-containing layer, and a lithium-aluminum alloy is formed on at least a part of a surface of the metallic lithium-containing layer located on the opposite side to the current collector".

Patent Literature 3 proposes "a lithium primary battery including a positive electrode using iron disulfide as a positive electrode active material, a negative electrode using a lithium alloy as a negative electrode active material, an electrode group in which the positive electrode and the negative electrode are wound with a separator therebetween, and a liquid electrolyte, wherein the lithium alloy contains at least one of magnesium and tin in an amount of 0.02 to 0.2 mol%".

Patent Literature 4 proposes "a liquid electrolyte for a primary battery including a positive electrode and a negative electrode containing metallic lithium or a lithium alloy, characterized in that the liquid electrolyte contains a solute, a nonaqueous solvent, and either or both a monofluorophosphoric acid salt and a difluorophosphoric acid salt".

### [Citation List]

### [Patent Literature]

[Patent Literature 1] Japanese Laid-Open Patent Publication No. S58-209862
[Patent Literature 2] Japanese Laid-Open Patent Publication No. 2012-138225
[Patent Literature 3] International Publication No. 2012/066709 pamphlet
[Patent Literature 4] Japanese Laid-Open Patent Publication No. 2009-252681

### [Summary of Invention]

### [Technical Problem]

The internal resistance of a lithium primary battery may increase during long-term use to deteriorate output characteristics.

### [Solution to Problem]

One aspect of the present disclosure relates to a lithium primary battery including: a positive electrode; a negative electrode; and a liquid electrolyte, wherein the positive electrode contains at least one selected from the group consisting of manganese dioxide and graphite fluoride, the negative electrode contains a lithium alloy, the lithium alloy contains magnesium, a content of the magnesium in the lithium alloy is 10% by mass or less, the liquid electrolyte contains a nonaqueous solvent, a solute, and an additive, the additive contains a phosphorus compound, and the phosphorus compound has a POₙ structure having a phosphorus atom and n oxygen atoms bonded to the phosphorus atom, where n represents 2 to 4.

### [Advantageous Effects of Invention]

According to the present disclosure, a decrease in output characteristics during long-term use of a lithium primary battery can be suppressed.

While the novel features of the invention are set forth particularly in the appended claims, the invention, both as to organization and content, will be better understood and appreciated, along with other objects and features thereof, from the following detailed description taken in conjunction with the drawings.

### [Brief Description of Drawing]

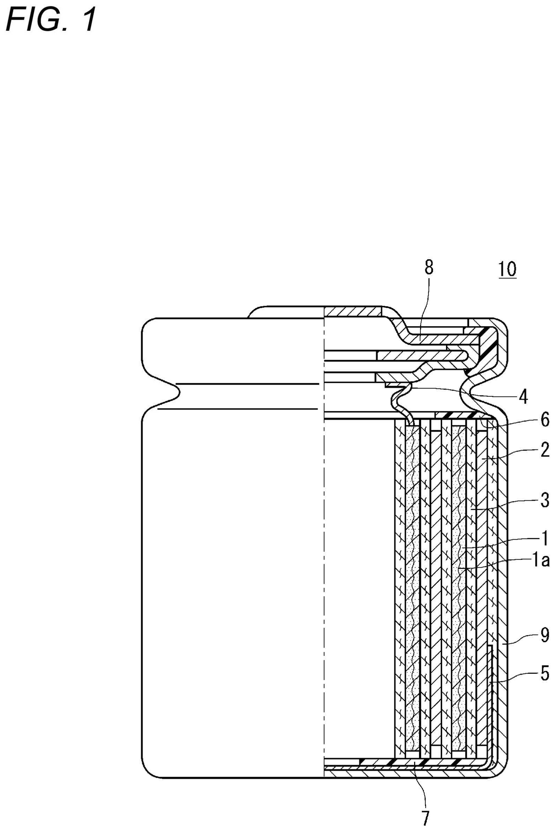

[FIG. 1] FIG. 1 is a front view of a lithium primary battery according to an embodiment of the present disclosure, partially in cross-section.

### [Description of Embodiments]

Embodiments of the present disclosure are described below by way of examples, but the present disclosure is not limited to the examples described below. In the following description, specific numerical values and materials may be exemplified in some cases, but other numerical values and other materials may be adopted as long as the effects of the present disclosure can be obtained. In the present description, the phrase "a numerical value A to a numerical value B" means to include the numerical value A and the numerical value B, and can be phrased as "a numerical value A or more and a numerical value B or less". In the following description, when the lower and upper limits of numerical values related to specific physical properties, conditions, or the like are mentioned as examples, any of the mentioned lower limits and any of the mentioned upper limits can be combined in any combination as long as the lower limit is not equal to or more than the upper limit. When a plurality of materials are mentioned as examples, one type of them may be selected and used singly, or two or more types of them may be used in combination.

A lithium primary battery according to an embodiment of the present disclosure includes a positive electrode, a negative electrode, and a liquid electrolyte. The positive electrode contains at least one selected from the group consisting of manganese dioxide and graphite fluoride. The negative electrode contains a lithium alloy. The lithium alloy contains magnesium (Mg). The Mg content in the lithium alloy is 10% by mass or less. The liquid electrolyte contains a nonaqueous solvent, a solute, and an additive. The additive contains a phosphorus compound. The phosphorus compound has a POₙ structure having a phosphorus atom and n oxygen atoms bonded to the phosphorus atom, where n represents 2 to 4.

When the above features are achieved, an increase in internal resistance is suppressed during long-term use, and a decrease in output characteristics (e.g., low-temperature pulse characteristics) due to an increase in the internal resistance can be suppressed. For example, the later-described output reduction rate is reduced. Although the detailed mechanism thereof is unknown, it is presumed as follows. The phosphorus compound and the solvent (e.g., carbonic acid ester) contained in the liquid electrolyte react on the surface of the negative electrode to form an organic-inorganic-hybrid coating film, which contains an organic component derived from the solvent and an inorganic component derived from the phosphorus compound, on the surface of the negative electrode (lithium-alloy containing Mg). The coating film is low in resistance and excellent in durability. In addition, since the coating film has good wettability to the negative electrode (lithium-alloy containing Mg), the effect of the coating film on reducing resistance and improving durability can be pronouncedly achieved in the negative electrode. As a result, the reaction proceeds uniformly on the surface of the negative electrode, lithium in the negative electrode is uniformly consumed, negative electrode deficiency (foil cracking) at the end of discharge is suppressed, and lithium in the negative electrode is utilized without waste. Due to these factors, a decrease in the output characteristics during long-term use is suppressed.

If the Mg content in the lithium alloy is more than 10% by mass, the negative electrode resistance may increase due to an increase in the proportion of Mg in the negative electrode to decrease the output characteristics.

### (Phosphorus Compound)

The phosphorus compound has a POₙ structure having a phosphorus atom and n oxygen atoms bonded to the phosphorus atom. n represents 2 to 4. In the POₙ structure, the bonds between the phosphorus atom and the oxygen atoms may be P-O bonds (single bonds), P=O bonds (double bonds), or intermediate bonds therebetween. The phosphorus compound may have a POM group (M represents a hydrogen atom or an alkali metal atom). Examples of the alkali metal atom include a lithium atom, a sodium atom, and a potassium atom. Among these, M preferably represents a lithium atom. The P-OM group may dissociate in the liquid electrolyte to form P-O⁻anions. The phosphorus compound may have a P-OR group (R represents an organic group such as an alkyl group). The phosphorus compound may be an ester compound. The phosphorus compound may have a hydrogen atom or a halogen atom (e.g., a fluorine atom) bonded to the phosphorus atom.

Examples of the phosphorus compound include orthophosphoric acid, monofluorophosphoric acid, difluorophosphoric acid, pyrophosphoric acid, polyphosphoric acid, metaphosphoric acid, phosphonic acid, phosphinic acid, and salts of these (or esters of these). Among these, the phosphorus compound is preferably orthophosphoric acid, monofluorophosphoric acid, difluorophosphoric acid, or a salt of one of these (e.g., a lithium salt).

The content of the phosphorus compound in the liquid electrolyte is preferably 2% by mass or less, more preferably 0.1% by mass or more and 2% by mass or less (or 1.5% by mass or less). The content of the phosphorus compound in the liquid electrolyte is the mass ratio (percentage) of the phosphorus compound to the total liquid electrolyte. For example, it is desirable that the content of the phosphorus compound in the liquid electrolyte is within the above range immediately after battery production (or in liquid electrolyte preparation). By contrast, since a portion of the phosphorus compound is consumed for coating film formation in the battery after a certain period of time has elapsed immediately after the production, the content of the phosphorus compound in the liquid electrolyte may be smaller than the above range. In this case, even if the content of the phosphorus compound in liquid electrolyte is small (e.g., close to the limit of detection), the above-described effects of the phosphorus compound can be recognized.

For analysis of the liquid electrolyte (phosphorus compound), liquid chromatography mass spectrometry (LC/MS) or gas chromatography mass spectrometry (GC/MS) can be used, for example. Ultraviolet spectroscopy (UV) may be performed along with nuclear magnetic resonance spectroscopy (NMR), infrared (IR) absorptiometry, or mass spectroscopy (MS).

### (Lithium Alloy)

The negative electrode contains a lithium alloy, and the lithium alloy contains Mg in an amount of 10% by mass or less. From the viewpoint of reducing the internal resistance and ensuring the capacity, the Li content in the lithium alloy may be 89% by mass or more, 90% by mass or more, or 95% by mass or more.

From the viewpoint of improving the output characteristics during long-term use, it is preferable that the lithium alloy further contains aluminum (Al). Hereinafter, a lithium alloy containing Mg and substantially free of Al is also referred to as "Li-Mg alloy". A lithium alloy containing Mg and Al are also referred to as "Li-Mg-Al alloy". It should be noted that "substantially free" means less than the limit of detection in compositional analysis (e.g., ICP emission spectroscopy or atomic absorption spectroscopy) of the lithium alloy.

As a result of addition of Al, Al suppresses an increase in internal resistance during long-term use but it tends to segregate in Li. On the other hand, Mg has very good dispersibility in Li. When the lithium alloy contains both Mg and Al, segregation of Al is suppressed due to the good dispersibility of Mg and non-uniform reaction of Li during long term use is suppressed. In this case, the effects of Mg and Al are stably achieved in the entire negative electrode, and Li is uniformly consumed on the surface of the negative electrode, thereby increasing the proportion of Li that can contribute to the discharge reaction at the end of discharge. When Al is contained together with Mg, a low-resistance coating film is likely to be formed stably, the output voltage at the end of discharge is further increased, and an increase in the internal resistance during long-term use and a decrease in the output characteristics associated therewith are further suppressed.

From the viewpoint of suppressing a decrease in the output characteristics during long-term use, the Mg content in the lithium alloy is preferably 0.01% by mass or more and 10% by mass or less, more preferably 0.02% by mass or more and 8% by mass or less, and further preferably 0.05% by mass or more and 7% by mass or less. The above-described Mg content in the lithium alloy is the Mg content in the Li-Mg alloy or the Li-Mg-Al alloy.

From the viewpoint of suppressing a decrease in the output characteristics during long-term use, the Al content in the lithium alloy (Li-Mg-Al alloy) may be 0.01% by mass or more and 2% by mass or less or may be 0.01% by mass or more and 1.5% by mass or less. From the same viewpoint as above, the content of Mg and Al in total in the Li-Mg-Al alloy is preferably 0.01% by mass or more and 10% by mass or less. The molar ratio: Mg/Al of Mg to Al may be 0.05 or more and 13 or less, for example.

The lithium alloy may contain an additional metal element other than Li, Mg, and Al. Examples of the additional metal element include Sn, Ni, Pb, In, Na, K, Ca, Fe, Ba, and Sr. From the viewpoint of ensuring the discharge capacity and stabilizing the internal resistance, the total content of the metal elements contained in the lithium alloy other than lithium is preferably 11% by mass or less.

The composition of the lithium alloy can be determined by inductively coupled plasma (ICP) emission spectroscopy or atomic absorption spectroscopy (AAS).

Hereinafter, the lithium primary battery of the present disclosure is described in further detail.

### [Lithium Primary Battery]

### (Positive Electrode)

The positive electrode contains, as a positive electrode active material, at least one selected from the group consisting of manganese dioxide and graphite fluoride. As the manganese dioxide, sintered electrolytic manganese dioxide is preferably used. A positive electrode containing manganese dioxide exhibits a relatively high voltage and is excellent in pulse discharge characteristics. The manganese dioxide may be in a mixed crystal state including multiple types of crystal states. The positive electrode may contain a manganese oxide other than manganese dioxide. Examples of the manganese oxide other than manganese dioxide include MnO, Mn₃O₄, Mn₂O₃, and Mn₂O₇. The main component of the manganese oxide contained in the positive electrode is preferably manganese dioxide. Here, the main component means that the proportion of the manganese dioxide in the manganese oxide(s) is 50% by mass or more. The proportion of the manganese dioxide in the manganese oxide(s) may be 70% by mass or more or 90% by mass or more.

The positive electrode includes, for example, a positive electrode current collector and a positive electrode mixture layer held on the positive electrode current collector. The positive electrode mixture layer is formed, for example, by applying a positive electrode mixture in a wet state onto the surface of a sheet-shaped positive electrode current collector or filling the positive electrode current collector with the mixture, applying pressure in the thickness direction, and drying.

The positive electrode mixture may contain a positive electrode active material, a binder, and a conductive agent, for example. Examples of the binder include fluorocarbon resins such as polytetrafluoroethylene, rubber particles, and acrylic resins. Examples of the conductive agent include conductive carbon materials. Examples of the conductive carbon materials include natural graphite, artificial graphite, carbon black, and carbon fibers.

Examples of the material of the positive electrode current collector include stainless steel, aluminum, and titanium. The positive electrode current collector is preferably a perforated current collector. Examples of the perforated current collector include an expanded metal, a mesh, and a punched metal.

In the case of a coin-shaped battery, a positive electrode may be configured by attaching a ring-shaped positive electrode current collector having an L-shape in cross section to a positive electrode mixture pellet. Alternatively, the positive electrode may be composed of only the positive electrode mixture pellet. The positive electrode mixture pellet is obtained, for example, by compression-molding a positive electrode mixture in a wet state prepared by adding an appropriate amount of water to the positive electrode active material and an additive, followed by drying.

In the case of a cylindrical battery, a positive electrode including a sheet-shaped positive electrode current collector and a positive electrode mixture layer held on the positive electrode current collector can be used. As the sheet-shaped positive electrode current collector, a perforated current collector is preferable. Examples of the perforated current collector include an expanded metal, a mesh, and a punched metal. The positive electrode mixture layer is obtained, for example, by applying the positive electrode mixture in a wet state onto the surface of a sheet-shaped positive electrode current collector or filling the positive electrode current collector with the mixture, applying pressure in the thickness direction, and drying.

### (Negative Electrode)

The negative electrode may contain a lithium alloy in the form of a foil (sheet), for example. The lithium alloy is formed to have any shape and thickness according to, for example, the shape, dimension, or standard performance of the lithium primary battery.

In the case of the cylindrical battery, the negative electrode may include a negative electrode current collector (e.g., a copper foil) supporting the lithium alloy but may be a lithium alloy in the form of a foil (sheet) without the negative electrode current collector. When the lithium alloy contains Mg, relatively strong Mg remains at the end of discharge. Therefore, the negative electrode can be formed using only the lithium alloy in the form of a foil (sheet) without a negative electrode current collector. The use of the lithium alloy containing Mg reduces breakage and partial deficiency of the negative electrode at the end of discharge in the case where the negative electrode does not include the negative electrode current collector. The shape of the negative electrode (lithium alloy) is maintained even at the end of discharge, and the conductivity of the entire negative electrode is ensured even when the negative electrode current collector is not used.

In the case of the coin-shaped battery, one obtained by punching a disk from a hoop of the lithium alloy may be used as a negative electrode. In the case of the cylindrical battery, a lithium alloy in the form of a sheet may be used as the negative electrode. The sheet can be obtained by extrusion, for example. More specifically, in the cylindrical battery, a lithium alloy foil having a shape with one long dimension and one short dimension is used, for example.

### (Liquid Electrolyte)

As the liquid electrolyte, a solution obtained by dissolving a lithium salt as a solute in a nonaqueous solvent is used. The liquid electrolyte further contains the above-described phosphorus compound as an additive.

Examples of the nonaqueous solvent include organic solvents that are typically used for liquid electrolytes of lithium primary batteries. Examples of the nonaqueous solvent include ethers, esters, and carbonic acid esters. As the nonaqueous solvent, dimethyl ether, γ-butyl lactone, propylene carbonate (PC), ethylene carbonate (EC), or 1,2-dimethoxyethane (DME) can be used, for example. One nonaqueous solvent may be used singly, or two or more nonaqueous solvents may be used in combination.

From the viewpoint of improving the discharge characteristics of the lithium primary battery, the nonaqueous solvent preferably contains a cyclic carbonic acid ester having a high boiling point and a chain ether having low viscosity even at low temperatures. The cyclic carbonic acid ester preferably includes at least one selected from the group consisting of PC and EC, and PC is particularly preferable. The chain ether preferably includes DME.

Examples of the solute (lithium salt) include LiCF₃SO₃, LiClO₄, LiBF₄, LiPF₆, LiRaSO₃ (Ra represents a fluorinated alkyl group having a carbon number of 1 to 4), LiFSO₃, LiN(SO₂Rb)(SO₂Rc) (Rb and Rc each independently represent a fluorinated alkyl group having a carbon number of 1 to 4), and LiN (FSO₂)₂. One lithium salt may be used singly, or two or more lithium salts may be used in combination. The concentration of the lithium ion (total concentration of lithium salts) contained in the liquid electrolyte is, for example, 0.2 mol/L or more and 2.0 mol/L or less, and may be 0.3 mol/L or more and 1.5 mol/L or less.

The liquid electrolyte may contain a second additive other than the phosphorus compound, examples of which include cyclic sulfonate esters (e.g., propane sultone), ethylene sulfites (e.g., ethylene sulfite), cyclic carbonates (e.g., vinylene carbonate and fluoroethylene carbonate), nitrile compounds (e.g., adiponitrile and succinonitrile), isocyanates (e.g., hexamethylene diisocyanate, 1,3-bis(isocyanatomethyl)cyclohexane, and isophorone diisocyanate), cyclic imides (e.g., phthalimide and hydroxyphthalimide), and phthalate esters (e.g., dimethyl phthalate and diethyl phthalate).

### (Separator)

The lithium primary battery generally includes a separator provided between the positive electrode and the negative electrode. As the separator, a porous sheet made of an insulative material resistant to the internal environment of the lithium primary battery should be used. Specific examples thereof include a nonwoven fabric made of synthetic resin, a microporous film made of synthetic resin, and laminates of these.

Examples of the synthetic resin used in the nonwoven fabric include polypropylene, polyphenylene sulfide, and polybutylene terephthalate. Examples of the synthetic resin used in the microporous film include polyolefin resins such as polyethylene, polypropylene, and ethylenepropylene copolymers. The microporous film may contain inorganic particles, as necessary. The thickness of the separator is 5 µm or more and 100 µm or less, for example.

No particular limitations are placed on the configuration of the lithium primary battery. The lithium primary battery may be a coin-shaped battery including a stacked electrode group formed by stacking the positive electrode having a disk shape and the negative electrode having a disk shape with the separator therebetween. Alternatively, it may be a cylindrical battery including a wound electrode group formed by spirally winding the positive electrode having a band shaped and the negative electrode having a band shape with the separator therebetween.

FIG. 1 is a front view of a cylindrical lithium primary battery according to an embodiment of the present disclosure, partially in cross-section. In a lithium primary battery 10, an electrode group in which a positive electrode 1 and a negative electrode 2 are wound with a separator 3 therebetween is housed in a battery case 9 together with a liquid electrolyte (not illustrated). A sealing plate 8 is fitted to the opening of the battery case 9. A positive electrode lead 4 connected to a current collector 1a of the positive electrode 1 is connected to the sealing plate 8. A negative electrode lead 5 connected to the negative electrode 2 is connected to the battery case 9. In addition, an upper insulating plate 6 and a lower insulating plate 7 are provided above and below the electrode group, respectively, in order to inhibit inner short circuits.

### <<Supplemental Remarks>>

According to the above description of the embodiments, the following techniques are disclosed.

### (Technique 1)

A lithium primary battery including:
a positive electrode; a negative electrode; and a liquid electrolyte,
wherein the positive electrode contains at least one selected from the group consisting of manganese dioxide and graphite fluoride,
the negative electrode contains a lithium alloy,
the lithium alloy contains magnesium,
a content of the magnesium in the lithium alloy is 10% by mass or less,
the liquid electrolyte contains a nonaqueous solvent, a solute, and an additive,
the additive contains a phosphorus compound, and
the phosphorus compound has a POₙ structure having a phosphorus atom and n oxygen atoms bonded to the phosphorus atom, where n represents 2 to 4.

### (Technique 2)

The lithium primary battery according to Technique 1, wherein the lithium alloy contains aluminum, and
a content of the aluminum and the magnesium in total in the lithium alloy is 0.01% by mass or more and 10% by mass or less.

### (Technique 3)

The lithium primary battery according to Technique 2, wherein a molar ratio of the magnesium to the aluminum in the lithium alloy is 0.05 or more and 13 or less.

### (Technique 4)

The lithium primary battery according to any one of Techniques 1 to 3, wherein the phosphorus compound includes at least one selected from the group consisting of difluorophosphoric acid, monofluorophosphoric acid, orthophosphoric acid, and salts of these.

### (Technique 5)

The lithium primary battery according to any one of Techniques 1 to 4, wherein a content of the phosphorus compound in the liquid electrolyte is 2% by mass or less.

### [Examples]

Hereinafter, the present disclosure is described further in detail based on examples and comparative examples. However, the present disclosure is not limited to the following examples.

### <<Examples 1 to 11 and Comparative Examples 1 to 7>>

### (Positive Electrode Production)

A positive electrode mixture in a wet state was prepared by adding 5 parts by mass of Ketjen Black being a conductive agent, 5 parts by mass of polytetrafluoroethylene being a binder, and an appropriate amount of pure water to 100 parts by mass of a positive electrode active material, followed by kneading. As the positive electrode active material, either electrolytic manganese dioxide (MnO₂) sintered at 400°C for 5 hours or graphite fluoride ((CF)ₙ) was used.

Next, a positive electrode precursor was produced by filling a positive electrode current collector of a 0.1 mm-thick expanded metal made of stainless steel with the positive electrode mixture. The positive electrode precursor was then dried, compressed by roll pressing, and cut into a size of 3.5 cm in length and 20 cm in width to obtain a positive electrode. Subsequently, a portion of the filled positive electrode mixture was peeled off, and one end of a positive electrode lead made of stainless steel was resistance-welded to the exposed part of the positive electrode current collector.

### (Negative Electrode Production)

A negative electrode was obtained by cutting a lithium alloy foil (thickness 250 µm) into a size of 3.7 cm in length and 22 cm in width. One end of a nickel-made negative electrode lead was connected to a predetermined part of the negative electrode by pressure welding. The additional element contained in the lithium alloy foil other than Li was Mg, Al, or both. The Mg content and the Al content in the lithium alloy foil were set to the values indicated in Table 1. The mark "-" in the column for the Mg content (and Al content) in Table 1 means that the amount of Mg (or Al) is less than the limit of detection in compositional analysis (e.g., ICP emission spectroscopy).

### (Electrode Group Production)

An electrode group was prepared by winding the positive electrode and the negative electrode with a separator therebetween. As the separator, a polypropylene-made microporous film having a thickness of 25 µm was used.

### (Liquid Electrolyte Preparation)

A liquid electrolyte was prepared by dissolving LiCF₃SO₃ at a concentration of 0.5 mol/L in a mixed solvent of PC, EC, and DME (volume ratio: 3:2:5), and further adding a phosphorus compound, as necessary. As the phosphorus compound, lithium phosphate (Li₃PO₄), lithium monofluorophosphate (Li₂PO₃F), or lithium difluorophosphate (LiPO₂F₂) was used. The content of the phosphorus compound in the liquid electrolyte was set to the value as indicated in Table 1.

### (Lithium Primary Battery Assembly)

The electrode group was housed in a cylindrical battery case serving also as a negative electrode terminal. As the battery case, an iron case (outer diameter 17 mm, height 45.5 mm) was used. Next, the liquid electrolyte was injected into the battery case, and the opening of the battery case was then closed using a metal-made sealing plate serving also as a positive electrode terminal. The other end of the positive electrode lead was connected to the sealing plate, and the other end of the negative electrode lead was connected to the inner bottom surface of the battery case. In the manner described above, lithium primary batteries were produced. With respect to each of the batteries immediately after the assembly, discharging at 1 A was performed for 1 minute and then aging was performed in an environment at 45°C for 3 days. Note that in Table 1, Al to A11 are batteries of Examples 1 to 11 and B1 to B7 are batteries of Comparative Examples 1 to 7.

The following pulse discharge characteristics (output characteristics) were evaluated for each of the obtained batteries of Examples and Comparative Examples.

### [Evaluation]

### (Initial and Post-Storage Output Voltages)

With respect to each of the batteries after the aging, pulse discharge at 200 mA was performed in an environment at -30°C for 1 second, and the lowest voltage at that time was determined as an initial output voltage X1.

Thereafter, constant current discharge at 2.5 mA was performed in an environment at 25°C until the depth of discharge (DOD) reached 75% (until the discharge capacity reached 75% of the battery capacity). The battery after the discharge was stored in an environment at 70°C for 120 days. The battery after the storage was subjected to pulse discharge in the same manner as above, and the lowest voltage at that time was determined as a post-storage output voltage X2.

### (Output Reduction Rate)

Using X1 and X2 obtained above, the output reduction rate was determined from the expression (X1 - X2)/X1 × 100.

The evaluation results are shown in Table 1. The output voltages in Table 1 are expressed as relative values (indices) when the initial output voltage of the battery B1 of Comparative Example 1 is defined as 100.

**[Table 1]**

| Li primary battery | Positive electrode | Negative electrode (Li alloy) | | | | Liquid electrolyte | | Evaluation | | |
|---|---|---|---|---|---|---|---|---|---|---|
| | | Al content (% by mass) | Mg content (% by mas) | Al + Mg content (% by mass) | Molar ratio Mg/Al | Phosphorous compound | Content (% by mass) | Initial output voltage (index) | Post-storage output voltage (index) | Output reduction rate (%) |
| A1 | MnO₂ | - | 0.5 | 0.5 | - | Lithium difluorophosphate | 1 | 102 | 83 | 18.6 |
| A2 | MnO₂ | - | 0.01 | 0.01 | - | Lithium monofluorophosphate | 1.5 | 101 | 81 | 19.8 |
| A3 | MnO₂ | - | 2 | 2 | - | Lithium difluorophosphate | 2 | 105 | 88 | 16.2 |
| A4 | MnO₂ | - | 7 | 7 | - | Lithium monofluorophosphate | 0.9 | 107 | 90 | 15.9 |
| A5 | MnO₂ | - | 10 | 10 | - | Lithium phosphate | 1.2 | 101 | 82 | 18.8 |
| A6 | MnO₂ | 0.01 | 0.1 | 0.11 | 11.10 | Lithium difluorophosphate | 0.3 | 104 | 89 | 14.4 |
| A7 | MnO₂ | 0.5 | 5.5 | 6 | 12.21 | Lithium difluorophosphate | 1 | 108 | 96 | 11.1 |
| A8 | MnO₂ | 1.5 | 8.5 | 10 | 6.29 | Lithium monofluorophosphate | 1.2 | 107 | 95 | 11.2 |
| A9 | MnO₂ | 0.2 | 0.01 | 0.21 | 0.056 | Lithium difluorophosphate | 0.5 | 102 | 87 | 14.7 |
| A10 | (CF)ₙ | 0.5 | 2 | 2.5 | 4.44 | Lithium difluorophosphate | 0.5 | 100 | 87 | 13.0 |
| A11 | MnO₂ | 0.5 | 5.5 | 6 | 12.21 | Lithium monofluorophosphate | 3 | 100 | 79 | 21.0 |
| B1 | MnO₂ | 0.2 | - | 0.2 | - | - | - | 100 | 69 | 31.0 |
| B2 | MnO₂ | - | 0.7 | 0.7 | - | - | - | 99 | 70 | 29.3 |
| B3 | MnO₂ | 0.2 | - | 0.2 | - | Lithium difluorophosphate | 1.5 | 100 | 74 | 26.0 |
| B4 | MnO₂ | 0.2 | - | 0.2 | - | Lithium monofluorophosphate | 1.5 | 100 | 74 | 26.0 |
| B5 | MnO₂ | 0.2 | - | 0.2 | - | Lithium phosphate | 2 | 99 | 72 | 27.3 |
| B6 | MnO₂ | 0.2 | 0.7 | 0.9 | 3.89 | - | - | 99 | 70 | 29.3 |
| B7 | MnO₂ | 2 | 12 | 14 | 6.66 | Lithium phosphate | 2 | 97 | 72 | 25.8 |

In the batteries A1 to A11 using the lithium alloy containing Mg and the liquid electrolyte containing a phosphorus compound, a decrease in the output characteristics after the storage was suppressed. In particular, a decrease in the output characteristics after the storage was further suppressed in the batteries A6 to A10 in which the Li-Mg-Al alloy was used and the content of the phosphorus compound was 2% by mass or less.

In the batteries B1 to B6, the output characteristics decreased after the storage because either or both the lithium alloy containing no Mg and the liquid electrolyte containing no phosphorus compound were used. In the battery B7 in which the Mg content in the lithium alloy was greater than 10% by mass, the initial and post-storage output voltages were low and the output reduction rate was increased.

Almost no improvement in the output characteristics after the storage was observed in the battery B2 in which the Li-Mg alloy foil was used for the negative electrode and no phosphorus compound was added to the liquid electrolyte, compared with the battery B1 in which the Li-Al alloy containing no Mg was used for the negative electrode and no phosphorous compound was added to the liquid electrolyte (output reduction rate: 31.0% → 29.3%).

Compared with the battery B1, the battery B4 in which the Li-Al alloy containing no Mg was used for the negative electrode and the liquid electrolyte contained 1.5% by mass of monofluorophosphate showed a very slight improvement in the output characteristics after the storage (output reduction rate: 31.0% → 26.0%).

Compared with the battery B1, the battery A2 in which the Li-Mg alloy was used for the negative electrode and the liquid electrolyte contained 1.5% by mass of monofluorophosphate was significantly improved in the output characteristics after the storage (output reduction rate: 31.0% → 19.8%). From the above, it can be understood that when the lithium alloy of the negative electrode contains Mg and the liquid electrolyte contains a phosphorus compound, the effect of suppressing a decrease in the output characteristics after the storage can be pronouncedly achieved.

### [Industrial Applicability]

The lithium primary battery of the present disclosure is suitably used, for example, as a main power supply or memory backup power supply for various meters (e.g., smart meters for electricity, water, and gas).

Although the present invention has been described in terms of the presently preferred embodiments, it is to be understood that such a disclosure is not to be interpreted as limiting. Various alterations and modifications will no doubt become apparent to those skilled in the art to which the present invention pertains, after having read the above disclosure. Accordingly, it is intended that the appended claims be interpreted to cover all alterations and modifications as fall within the true spirit and scope of the invention.

### [Reference Signs List]

- 1: positive electrode
- 1a: positive electrode current collector
- 2: negative electrode
- 3: separator
- 4: positive electrode lead
- 5: negative electrode lead
- 6: upper insulating plate
- 7: lower insulating plate
- 8: sealing plate
- 9: battery case
- 10: lithium primary battery

## Claims

1. A lithium primary battery comprising:
a positive electrode; a negative electrode; and a liquid electrolyte,
wherein the positive electrode contains at least one selected from the group consisting of manganese dioxide and graphite fluoride,
the negative electrode contains a lithium alloy,
the lithium alloy contains magnesium,
a content of the magnesium in the lithium alloy is 10% by mass or less,
the liquid electrolyte contains a nonaqueous solvent, a solute, and an additive,
the additive contains a phosphorus compound, and
the phosphorus compound has a POₙ structure having a phosphorus atom and n oxygen atoms bonded to the phosphorus atom, where n represents 2 to 4.

2. The lithium primary battery according to claim 1,
wherein the lithium alloy contains aluminum, and
a content of the aluminum and the magnesium in total in the lithium alloy is 0.01% by mass or more and 10% by mass or less.

3. The lithium primary battery according to claim 2,
wherein a molar ratio of the magnesium to the aluminum in the lithium alloy is 0.05 or more and 13 or less.

4. The lithium primary battery according to claim 1,
wherein the phosphorus compound includes at least one selected from the group consisting of difluorophosphoric acid, monofluorophosphoric acid, orthophosphoric acid, and salts of these.

5. The lithium primary battery according to claim 1,
wherein a content of the phosphorus compound in the liquid electrolyte is 2% by mass or less.
